# EUROPÄISCHE PATENTSCHRIFT

(11) **EP 0 935 541 B1**
(45) Veröffentlichungstag und Bekanntmachung des Hinweises auf die Patenterteilung: **10.07.2002**
(21) Anmeldenummer: 97949927.4
(22) Anmeldetag: 11.11.1997
(51) Int. Cl.: B60R 16/02, B62D 15/02, G01B 7/30

(54) **VORRICHTUNG ZUR ERMITTLUNG DER WINKELSTELLUNG DES LENKRADES IN EINEM KRAFTFAHRZEUG**
DEVICE FOR DETERMINING THE ANGULAR POSITION OF THE STEERING WHEEL IN A MOTOR VEHICLE
DISPOSITIF POUR DETERMINER LA POSITION ANGULAIRE DU VOLANT DE DIRECTION DANS UNE AUTOMOBILE

(30) Priorität: 11.11.1996 DE 19647705
(43) Veröffentlichungstag der Anmeldung: 18.08.1999
(73) Patentinhaber: TAKATA - PETRI Aktiengesellschaft, 63743 Aschaffenburg (DE)
(72) Erfinder: BONN, Helmut, D-63808 Haibach (DE); HÖSSBACHER, Gerhard, D-63743 Aschaffenburg (DE); ZAWIDZKI, Ulrich, D-63834 Sulzbach (DE)
(74) Vertreter: Baumgärtel, Gunnar, Dr.
(86) Internationale Anmeldenummer: DE9702675
(87) Internationale Veröffentlichungsnummer: WO9821070

(56) Entgegenhaltungen:
- EP-A- 0 377 097
- EP-A- 0 460 417
- WO-A-89/07058
- DE-A- 3 939 905
- DE-A- 4 131 533
- DE-U- 29 607 713

## Beschreibung

Die Erfindung betrifft eine Vorrichtung zur Ermittlung der Winkelstellung des Lenkrades in einem Kraftfahrzeug nach dem Oberbegriff des Anspruchs 1 (siehe z.B. DE-A-4 131 533).

Zur Ermittlung der Winkelstellung des Lenkrades sind induktive und optische Lenkwinkelsensoren bekannt. Die mit deren Hilfe ermittelten Meßwerte werden einer nachgeordneten elektronischen Schaltung zur Ermittlung des Lenkwinkels zugeführt. Die bekannten Lenkwinkelsensoren sind als separates Teil unterhalb des Lenkstockschalters im Kraftfahrzeug befestigt. Der Nachteil dieser Anordnung besteht darin, daß für den Lenkwinkelsensor zusätzlich Bauraum benötigt wird und zusätzliche Kosten verursacht werden.

Der Erfindung liegt die Aufgabe zugrunde, bei einer gattungsgemäßen Vorrichtung die Ermittlung des Lenkwinkels berührungslos und ohne zusätzlichen Bauraum und mit geringeren Kosten zu ermöglichen.

Erfindungsgemäß wird das gemäß den Merkmalen des Anspruchs 1 erreicht.

Bei einer Vorrichtung zur Ermittlung der Winkelstellung des Lenkrades in einem Kraftfahrzeug unter Verwendung eines Lenkwinkelsensors und einer elektronischen Auswerteeinrichtung zur Ermittlung der Winkelstellung, wobei der Lenkwinkelsensor in einer einen Stator und Rotor aufweisenden Kontakteinheit zur Übertragung von Energie und Daten von stationären Baugruppen des Kraftfahrzeuges zum Lenkrad und in umgekehrter Richtung als Bestandteil des Stators und Rotors integriert ist, ist erfindungsgemäß der Lenkwinkelsensor als optischer Lenkwinkelsensor in einer berührungslos arbeitenden optischen Kontakteinheit angeordnet.

Durch diese Integration des Lenkwinkelsensors in die ohnehin vorhandene Kontakteinheit wird sowohl die angestrebte Bauraumverkleinerung als auch eine Kostenreduzierung erreicht. Der Lenkwinkelsensor und die unterschiedlichen Arten von Kontakteinheiten sind zu einem System zusammengefaßt und können somit als Baueinheit an die Autoindustrie geliefert werden.

In einer Ausführungsform weist der optische Lenkwinkelsensor am Rotor oder Stator einen die Winkelstellung des Lenkrades darstellenden Strichcode auf, dem am Stator oder Rotor eine Baugruppe zur Erfassung und Übertragung der mittels des Strichcodes ermittelten Winkelstellung zugeordnet ist. Der Strichcode kann mittels der 2 Komponenten-Technik am Rotor oder Stator angespritzt sein. Dem Strichcode ist zweckmäßig eine gepulste Lichtquelle zugeordnet, so daß der unbeleuchtete Strichcode im Betrieb gepulst angeleuchtet wird, wodurch Energie eingespart wird. Bei Anordnung des optischen Lenkwinkelsensors in einer optischen Kontakteinheit wird der Strichcode durch für die Energieübertragung vorgesehene LEDs mitbeleuchtet, so daß eine zusätzliche Beleuchtung nicht erforderlich ist.

Als Baugruppe zur Erfassung und Übertragung ist mindestens ein Sender und Empfänger vorgesehen, die im radialen Abstand zueinander ringförmig am Stator angeordnet sind, und zwischen denen eine Zwischenwand vorgesehen ist, auf der der Strichcode angebracht ist. Sender, Empfänger und Zwischenwand sind vorzugsweise konzentrisch zueinander angeordnet oder liegen sich in axialer Richtung gegenüber.

Sender und Empfänger arbeiten vorzugsweise im infraroten Wellenlängenbereich. Die Signale werden vom Infrarotsender über die Codespur zum Infrarotempfänger übertragen.

Der Lenkwinkel wird in bekannter Weise inkrementell gemessen , d.h. ein Mikrokontroller zählt die Impulse der Reflexlichtschranken und bildet daraus den Lenkwinkel. Damit entsteht eine Abhängigkeit zur zulässigen Drehgeschwindigkeit und dem Mikrokontrollerkontakt.

In einer weiteren Ausführungsform ist vorgesehen, daß als Baugruppe zur Erfassung und Übertragung ein CCD-Element mit Lupe vorgesehen ist. Durch die dadurch erreichte Fokussierung können größere axiale und radiale Toleranzen ausgeglichen werden.

Bei diesem optischen Lenkwinkelsensor enthält also der Strichcode die Information über die Winkelstellung des Lenkrades. Mittels der Dioden oder des CCD-Elementes wird diese Information erfaßt und an die nachgeordnete an sich bekannte Elektronik übertragen. Dort wird aus dem codierten Meßwert die Winkelstellung errechnet.

In einer Ausgestaltung ist vorgesehen, daß der Strichcode auf einem ringförmigen Träger angebracht ist, dem in radialer Richtung die CCD-Elemente zugeordnet sind. Es ist aber auch möglich, den Strichcode auf einem Datenring für die Multifunktionen im Lenkrad vorzusehen, dem die CCD-Elemente zugeordnet sind.

Neben der radialen Zuordnung des Strichcodes und der CCD-Elemente ist auch eine axiale Zuordnung möglich. So ist in einer Ausgestaltung vorgesehen, daß der Strichcode am Lenkrad und die CCD-Elemente axial am Stator angebracht sind.

Um bei einem optischen Lenkwinkelsensor das Beschlagen der optischen Bauteile mit Sicherheit zu verhindern, kann an der optischen Übertragungsstrecke ein Feuchteentzugsmittel oder Metallring vorgesehen sein. Diese können unmittelbar an der optischen Übertragungsstrecke oder in einem Labyrinth vorgesehen sein, das die optische Übertragungsstrecke umgibt.

Die Erfindung soll in Ausführungsbespielen anhand von Zeichnungen erläutert werden. Es zeigen:

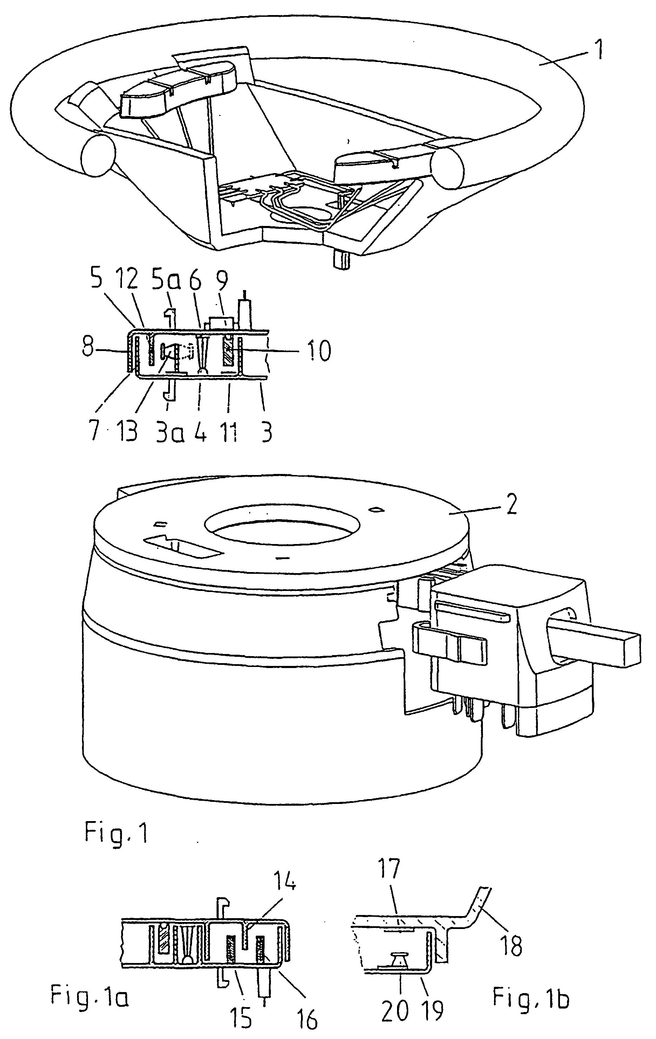

- Fig. 1: eine Lenkradanordnung mit optischem Lenkwinkelsensor;
- Fig. 1a: einen Ausschnitt der Lenkradanordnung mit einer zweiten Ausführungsform des Lenkwinkelsensors;
- Fig. 1b: einen Ausschnitt der Lenkradanordnung mit einer dritten Ausführungsform des Lenkwinkelsensors;

Die Fig. 1 zeigt ein Multifunktionslenkrad 1 und eine stationäre Lenksäulenverkleidung 2, die Baugruppen aufweisen, zwischen denen Energie und Daten übertragen werden sollen. Zu diesem Zweck sind an einem Stator 3 einer Kontakteinheit Lichtemitterdioden (LED) 4 als Sender ringförmig angeordnet. Der Stator 3 ist an der Lenksäulenverkleidung 2 mittels Befestigungshaken 3a befestigt.

Dem Stator 3 ist ein Rotor 5 zugeordnet, an dem Fotozellen 6 als Empfänger ringförmig angeordnet sind. Dabei bilden die LED 4 des Stators 3 und die Fotozellen 6 des Rotors 5 eine Übertragungsstrecke in einem ersten Stromkreis, in dem Energie und Daten von stationären Baugruppen des KFZ zum Lenkrad übertragen werden. Der Rotor 5 ist mittels Befestigungshaken 5a am Lenkrad befestigt. Der Stator 3 und Rotor 5 sind kreisförmig und weisen einen Außenrand 7 bzw. 8 auf.

Weiterhin ist am Rotor 5 eine Leuchtdiode 9 als Sender vorgesehen, die in einem glasklaren Kunststoffring 10 eingebettet ist, der ebenfalls am Rotor 5 befestigt ist. Der Leuchtdiode 9 ist am Stator 3 eine Fotozelle 11 als Empfänger zugeordnet. Die Leuchtdiode 9 mit dem Kunststoffring 10 und die Fotozelle 11 bilden die Übertragungsstecke in einem zweiten Stromkreis, in dem Daten vom Lenkrad zu stationären Baugruppen übertragen werden.

Die vorher beschriebenen Baugruppen stellen die Kontakteinheit dar, mittels derer berührungslos Energie und Daten von stationären Baugruppen auf das Lenkrad und Daten vom Lenkrad auf die stationären Baugruppen übertragen werden. Zusätzlich ist in der Kontakteinheit der Lenkwinkelsensor vorgesehen. In der Fig. 1 ist in einer ersten Ausführungsform eine parallel zum Außenrand 7 verlaufende Zwischenwand 12 vorhanden, die mit einem Strichcode versehen ist. Dieser Code enthält die Information über die unterschiedlichen Winkelstellungen des Lenkrades. Diese Information wird mittels eines CCD-Elementes 13, das mit einer Lupe ausgestattet ist und am Stator 3 befestigt ist, erfaßt. Die Beleuchtung für den Strichcode liefern die für die Energieübertragung zum Lenkrad vorhandenen LED 4. Mittels einer an sich bekannten elektronischen Schaltung mit Rechner wird anschließend der Lenkwinkel bestimmt.

Bei dieser Ausführungsform kann der Strichcode auch auf dem Kunststoffring 10 aufgebracht sein, wobei das CCD-Element dann in der gestrichelt gezeichneten Position angeordnet ist.

In der zweiten Ausführungsform nach Fig. 1a sind Reflexionslichtschranken vorgesehen. Es ist eine parallel zum Rand 7 verlaufende Zwischenwand 14 vorhanden, die ebenfalls mit einem Strichcode versehen ist und für die verwendete Strahlung, vorzugsweise Infrarotstrahlung, durchlässig ist. Diesem Strichcode sind ein Sender 15 und ein Empfänger 16 zugeordnet, die auf dem Stator 3 befestigt sind und an entgegengesetzten Seiten der Zwischenwand 14 liegen, d.h., der Strichcode liegt zwischen der Sende- und der Empfangsdiode. Die Infrarot-Sendediode überträgt die Signale über die Codierung zur Infrarot-Empfangsdiode. Diese ist an eine an sich bekannte elektronische Schaltung mit Rechner angeschlossen, in der die Winkelstellung des Lenkrades ermittelt wird.

Während in den bisherigen Ausführungsformen der Strichcode einerseits und die CCD-Elemente bzw. Sender und Empfänger andererseits radial gegenüberliegen, ist bei der dritten Ausführungsform nach Fig. 1b eine axiale Anordnung vorgesehen. So ist ein ringförmiger Strichcode 17 auf der Unterseite der den Rotor bildenden Lenkradnabe 18 aufgebracht. Auf einem Stator 19 ist axial dem Strichcode gegenüberliegend ein CCD-Element 20 angeordnet.

## Patentansprüche

1. Vorrichtung zur Ermittlung der Winkelstellung des Lenkrades (1) in einem Kraftfahrzeug unter Verwendung eines Lenkwinkelsensors und einer elektronischen Auswerteeinrichtung zur Ermittlung der Winkelstellung, wobei der Lenkwinkelsensor in einer einen Stator (3, 19) und Rotor (5, 18) aufweisenden Kontakteinheit zur Übertragung von Energie und Daten von stationären Baugruppen des Kraftfahrzeuges zum Lenkrad und in umgekehrter Richtung als Bestandteil des Stators und Rotors integriert ist,
**dadurch gekennzeichnet,**
**daß** der Lenkwinkelsensor als optischer Lenkwinkelsensor in einer berührungslos arbeitenden optischen Kontakteinheit angeordnet ist.

2. Vorrichtung nach Anspruch 1, **dadurch gekennzeichnet, daß der Lenkwinkelsensor** am Rotor (5) oder Stator (3) einen n die Winkelstellung des Lenkrades (1) darstellenden Strichcode (17) aufweist, dem am Stator (3) oder Rotor (5) eine Baugruppe zur Erfassung und Übertragung der mittels des Strichcodes ermittelten Winkelstellung zugeordnet ist.

3. Vorrichtung nach Anspruch 2, **dadurch gekennzeichnet, daß** der Strichcode (17) mittels der 2 Komponenten - Technik gespritzt ist.

4. Vorrichtung nach mindestens einem der Ansprüche 2 **bis** 3, **dadurch gekennzeichnet, daß** dem Strichcode (17) eine gepulste Lichtquelle zugeordnet ist.

5. Vorrichtung nach mindestens einem der Ansprüche 2 bis 4, **dadurch gekennzeichnet, daß** als Baugruppe zur Erfassung und Übertragung mindestens ein Sender (15) und Empfänger (16) vorgesehen ist, die im Abstand zueinander am Stator angeordnet sind, und zwischen denen eine Zwischenwand (14) vorgesehen ist, auf der der Strichcode angebracht ist.

6. Vorrichtung nach Anspruch 5, **dadurch gekennzeichnet, daß** Sender (15), Empfänger (16) und Zwischenwand (14) konzentrisch zueinander angeordnet sind oder in axialer Richtung gegenüberliegen.

7. Vorrichtung nach mindestens einem der Ansprüche 1 bis 4, **dadurch gekennzeichnet, daß** als Baugruppe zur Erfassung und Übertragung mindestens ein CCD-Element (13) mit Lupe vorgesehen ist.

8. Vorrichtung nach Anspruch 7, **dadurch gekennzeichnet, daß** der Strichcode auf einem ringförmigen Träger (12) vorgesehen ist, dem in radialer Richtung das CCD-Element (13) zugeordnet ist.

9. Vorrichtung nach Anspruch 7 oder 8, **dadurch gekennzeichnet, daß** der Strichcode auf einem Datenring für die Multifunktionen im Lenkrad vorgesehen ist, dem die CCD-Elemente zugeordnet sind.

10. Vorrichung nach Anspruch 9, **dadurch gekennzeichnet, daß** der Strichcode (17) am Lenkrad und das CCD-Element (20) axial am Statör (19) angebracht sind.

11. Vorrichtung nach mindestens einem der vorhergehenden Ansprüche, **dadurch gekennzeichnet, daß** an der optischen Übertragungsstrecke ein Feuchteentzugsmittel oder Metallring vorgesehen ist.

12. Vorrichtung nach Anspruch 11, **dadurch gekennzeichnet, daß** das Feuchteentzugsmittel oder der Metallring in einem Labyrinth vorgesehen ist, das die optische Übertragungsstrecke umgibt.

## Claims

1. Device for determining the angular position of the steering wheel (1) in a motor vehicle by using a steering angle sensor and an electronic evaluation device for determining the angular position, whereby the steering angle sensor is integrated in a contact unit having a stator (3,19) and rotor (5,18) for transferring energy and data from stationary structural groups of the motor vehicle to the steering wheel and vice versa, as a component of the stator and rotor
**characterised in that**
the steering angle sensor is arranged as an optical steering angle sensor in an optical contact unit operating in contactless manner.

2. Device according to claim 1 **characterised in that** the steering angle sensor on the rotor (5) or stator (3) has a bar code (17) representing the angular position of the steering wheel (1) and associated with a structural group on the stator (3) or rotor (5) for detecting and transferring the angular position determined by means of the bar code.

3. Device according to claim 2 **characterised in that** the bar code (17) is injected by the 2-component technique.

4. Device according to at least one of the claims 2 to 3 **characterised in that** a pulsating light source is associated with the bar code (17).

5. Device according to at least one of claims 2 to 4 **characterised in that** at least one transmitter (15) and receiver (16) are provided as one structural group for detection and transfer wherein these are arranged at a distance from each other on the stator and between them is a partition wall (14) on which the bar code is applied.

6. Device according to claim 5 **characterised in that** the transmitter (15), receiver (16) and partition (14) are arranged concentric with each other or are axially opposite one another.

7. Device according to at least one of claims 1 to 4 **characterised in that** at least one CCD element (13) with magnifier is provided as structural group for detection and transfer.

8. Device according to claim 7 **characterised in that** the bar code is provided on a ring-shaped carrier (12) associated radially with the CCD element (13).

9. Device according to claim 7 or 8 **characterised in that** the bar code is provided on a data ring for the multi functions in the steering wheel associated with the CCD elements.

10. Device according to claim 9 **characterised in that** the bar code (17) is attached to the steering wheel and the CCD element (20) is attached axially on the stator (19).

11. Device according to at least one of the preceding claims, **characterised in that** moisture extraction means or metal ring is provided on the optical transfer path.

12. Device according to claim 11, **characterised in that** the moisture extraction means or the metal ring are provided in a labyrinth which encloses the optical transfer path.

## Revendications

1. Dispositif pour déterminer la position angulaire du volant de direction (1) dans une automobile mettant en oeuvre un capteur d'angle de direction et un système de mesure permettant de déterminer la position angulaire, dans lequel le capteur d'angle de direction est intégré, en tant qu'élément constitutif du stator et du rotor, à une unité de contact présentant un stator (3, 19) et un rotor (5, 18) servant à la transmission de l'énergie et des données des modules stationnaires de l'automobile vers le volant de direction et en sens inverse,
**caractérisé en ce que**
le capteur d'angle de direction, en tant que capteur d'angle de direction optique, est disposé à l'intérieur d'une unité de contact optique fonctionnant sans contact physique.

2. Dispositif selon la revendication 1, **caractérisé en ce que** le capteur d'angle de direction présente au niveau du rotor (5) ou du stator (3) un code-barres correspondant à la position angulaire du volant de direction (1), capteur auquel est adjoint, au niveau du stator (3) ou du rotor (5), un module permettant d'enregistrer et de transmettre la position angulaire déterminée au moyen du code-barres.

3. Dispositif selon la revendication 2, **caractérisé en ce que** le code-barres (17) est appliqué au moyen de la technique de pulvérisation à deux composantes.

4. Dispositif selon au moins l'une des revendications 2 à 3, **caractérisé en ce que** l'on adjoint au code-barres une source lumineuse pulsée.

5. Dispositif selon au moins l'une des revendications 2 à 4, **caractérisé en ce que** l'on emploie, en tant que module pour l'enregistrement et la transmission, au moins un émetteur (15) et un récepteur (16), placés au niveau du stator et écartés l'un de l'autre, et **en ce que** l'on prévoit une cloison (14) entre les deux sur laquelle est appliqué le code-barres.

6. Dispositif selon la revendication 5, **caractérisé en ce que** l'émetteur (15), le récepteur (16) et la cloison (14) présentent, l'un par rapport à l'autre, une disposition concentrique ou qu'ils sont placés l'un en face de l'autre en direction axiale.

7. Dispositif selon au moins l'une des revendications 1 à 4, **caractérisé en ce que** l'on emploie au moins un élément CCD (13) doté d'une loupe en tant que module pour l'enregistrement et la transmission.

8. Dispositif selon la revendication 7, **caractérisé en ce que** le code-barres se trouve sur un support (12) annulaire auquel est adjoint l'élément CCD en direction radiale.

9. Dispositif selon la revendication 7 ou 8, **caractérisé en ce que** le code-barres se trouve sur un anneau de données, associé aux caractéristiques multifonctions, à l'intérieur du volant de direction, auquel est adjoint l'élément CCD.

10. Dispositif selon la revendication 9, **caractérisé en ce que** le code-barres (17) est placé au niveau du volant de direction et l'élément CCD (20) est placé de façon axiale au niveau du stator (19).

11. Dispositif selon au moins l'une des revendications précédentes, **caractérisé en ce** l'on emploie un moyen d'élimination de l'humidité ou une bague métallique au niveau de la liaison de transmission optique.

12. Dispositif selon la revendication 11, **caractérisé en ce que** le moyen d'élimination de l'humidité ou la bague métallique se trouve à l'intérieur d'un labyrinthe qui enceint la liaison de transmission optique.
